(19) Europäisches Patentamt
European Patent Office
Office européen des brevets

(11) **EP 3 450 621 B1**

(12) **EUROPÄISCHE PATENTSCHRIFT**

(45) Veröffentlichungstag und Bekanntmachung des Hinweises auf die Patenterteilung:
**18.12.2019 Patentblatt 2019/51**

(21) Anmeldenummer: **17188160.0**

(22) Anmeldetag: **28.08.2017**

(51) Int Cl.:
**D06P 5/30** (2006.01)

(54) **VERFAHREN UND VORRICHTUNG ZUM ERZEUGEN EINER DREIDIMENSIONALEN TEXTUR**

METHOD AND DEVICE FOR GENERATING A THREE-DIMENSIONAL TEXTURE

PROCÉDÉ ET DISPOSITIF DESTINÉS À PRODUIRE UNE TEXTURE TRIDIMENSIONNELLE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**06.03.2019 Patentblatt 2019/10**

(73) Patentinhaber: **Aeoon Technologies GmbH
6233 Kramsach (AT)**

(72) Erfinder: **Schiestl, Angelo
6336 Langkampfen (AT)**

(74) Vertreter: **Wunderlich & Heim Patentanwälte
Partnerschaftsgesellschaft mbB
Irmgardstrasse 3
81479 München (DE)**

(56) Entgegenhaltungen:
**WO-A1-2005/113692      JP-A- 2003 336 146
US-A1- 2017 144 476**

EP 3 450 621 B1

**Beschreibung**

Die Erfindung betrifft ein Verfahren zum Erzeugen einer definierten dreidimensionalen Textur auf einem Textil gemäß dem Oberbegriff des Anspruchs 1 und eine dreidimensionale Textur für ein Textil gemäß dem Oberbegriff des Anspruchs 10.

Bei einem solchen Verfahren wird die Textur auf dem Textil mit einer definierten Grundfläche und einer definierten Höhe vorgesehen, die Textur mit mindestens einer Texturschicht gebildet, wobei die Höhe und die Grundfläche der Textur durch mindestens eine definierte Höhe und mindestens eine definierte Grundfläche der mindestens einen Texturschicht eingestellt werden, mindestens eine volumenveränderliche Tinte in Form von einzelnen Tintentröpfchen auf dem Textil aufgetragen, wobei entsprechend der Grundfläche der Textur eine Vielzahl von Tintentröpfchen auf dem Textil vorgesehen werden und die aufgetragenen Tintentröpfchen aktiviert werden, wodurch eine vordefinierte Volumenzunahme der Tintentröpfchen erzeugt und die mindestens eine Texturschicht auf dem Textil gebildet wird.

Eine entsprechende dreidimensionale Textur für ein Textil ist mit einer Grundfläche und einer Höhe gebildet, weist mindestens eine Texturschicht auf, die aus mindestens einer volumenveränderlichen Tinte in Form einzelner Tintentröpfchen gebildet ist, welche auf das Textil auftragbar und für eine definierte Volumenzunahme aktivierbar sind.

Im Bereich der textilen Drucktechnik besteht grundsätzlich eine Herausforderung darin, aufzudruckende Texturen mit einem definierten Höhenprofil vorzusehen WO-A1-2005/113692 offenbart eine dreidimensionale Textur für ein Textil.

Grundsätzlich ist es bekannt, eine Druckertinte auf einem Textil vorzusehen, wobei eine Flüssigkeit für die zu erstellende dreidimensionale Textur auf dem Textil flächendeckend aufgebracht wird. Durch anschließende Aktivierung wird das Tintenmaterial aufgeschäumt, wodurch die Textur auf dem Textil mit einer statistischen Höhenverteilung gebildet wird.

Dieses Verfahren unterliegt insofern einer Beschränkung, als dass die sich einstellende Höhenverteilung der dreidimensionalen Struktur lediglich über eine Aktivierungsdauer, also einen Aufschäumungsgrad, beeinflusst werden kann.

Diese Art der Steuerung ist jedoch insofern nachteilig, als dass eine Mindestaktivierungsdauer erforderlich ist, um die ansonsten flüssige und klebrige Tinte dauerhaft und ortsfest auf dem Textil vorzusehen. Es ist also lediglich ein geringer zeitlicher Spielraum gegeben, in dem eine geringfügige Anpassung der Höhe der dreidimensionalen Textur auf einem Textil erreichbar ist. Ein genaueres Einstellen der Texturhöhe ist nicht ermöglicht.

Die vorliegende Erfindung stellt sich der **Aufgabe**, ein Verfahren und ein Erzeugnis anzugeben, mit welchen eine dreidimensionale Textur auf einem Textil mit beliebiger Bemaßung bereitgestellt wird.

Erfindungsgemäß wird die Aufgabe durch ein Verfahren gemäß dem Anspruch 1 und mit dem Erzeugnis gemäß dem Anspruch 10 gelöst. Bevorzugte Ausführungsformen der vorliegenden Erfindung sind in den abhängigen Ansprüchen angegeben.

Das erfindungsgemäße Verfahren ist dadurch gekennzeichnet, dass zum Bereitstellen der definierten Höhe der mindestens einen Texturschicht zwischen den aufgetragenen Tintentröpfchen für die Texturschicht mindestens ein definierter Abstand eingestellt wird, der kleiner und/oder gleich einem Durchmesser von aktivierten Tintentröpfchen der Texturschicht ist.

Ein erster Grundgedanke der Erfindung besteht darin, durch Beabstandung der Tintentröpfchen für eine Texturschicht einen definierten Bereich um das Tintentröpfchen zu schaffen, in welchen das Tintentröpfchen bei Aktivierung expandieren kann. Der Abstand kann grundsätzlich beliebig gewählt werden. Da die jeweiligen Tintentröpfchen innerhalb einer Texturschicht von weiteren Tintentröpfchen umgeben sind, ist in der Ebene der Bereich, in welchen das jeweilige Tintentröpfchen expandieren kann, beschränkt. Durch Einstellen des beschränkten Bereichs innerhalb einer Texturschichtebene kann eine weitere gerichtete Expansion in einen unbeschränkten Bereich, insbesondere in die Höhe forciert werden. Durch das definierte Einstellen des Abstands der einzelnen Tintentröpfchen einer Texturschicht zueinander und der damit verbundenen definierten Beschränkung des zur Verfügung stehenden Bereichs für eine Expansion jedes einzelnen Tintentröpfchens innerhalb der Texturschichtebene kann definiert eingestellt werden, mit welcher Höhe die Texturschicht, insbesondere die einzelnen expandierten Tintentröpfchen gebildet werden.

Je größer der Abstand zwischen den einzelnen Tintentröpfchen einer Texturschicht gewählt wird, desto größer ist der Bereich innerhalb der Ebene, der den Tintentröpfchen für eine Expansion zur Verfügung steht. Je größer der zur Verfügung stehende Bereich für eine Expansion, desto geringer kann die gerichtete Expansion in die Höhe ausfallen, da durch die vordefinierte Volumenzunahme der Tintentröpfchen bei Aktivierung die Gesamtexpansion, also die insgesamte Volumenzunahme, vordefiniert sein kann. Die gerichtete Expansion definiert hier den Teil der Expansion der aufgrund des beschränkten Platzes in der zu bildenden Texturschicht zusätzlich in die Höhe stattfindet. Eine ungehinderte Expansion ohne Platzbeschränkung in der Ebene kann in etwa einer Zunahme des Durchmessers einer Kugel, etwa gleichmäßig in alle Raumrichtungen, entsprechen.

Durch den begrenzten Raum, welcher den einzelnen Tintentröpfchen für eine Expansion innerhalb einer Texturschicht zur Verfügung steht, kann das expandierte Tintentröpfchen im Vergleich zu einer unbeschränkten Expansion von einer Kugelform abweichen. Die Tintentröpfchen einer Texturschicht können also nach der Expansion um den Volumenanteil zusätzlich in die Höhe expandieren, welcher innerhalb der Ebene aufgrund des beschränkten Platzangebots nicht zur Verfügung steht.

Je näher sich die Tintentröpfchen innerhalb der Texturschicht kommen, also je geringer der Bereich für eine Expansion der Tintentröpfchen innerhalb der Texturschicht ist, desto größer kann die Zunahme der Höhe der Texturschicht bei Aktivierung der Tintentröpfchen ausfallen. Hierbei können sich die Tintentröpfchen gegenseitig bei der Expansion innerhalb der Ebene der Texturschicht behindern und somit eine gezwungene Expansion der Tintentröpfchen in die Höhe bewirken.

Wird ein Abstand zwischen den Tintentröpfchen gewählt, welcher größer ist als der Durchmesser eines expandierten Durchmessers, können die Tintentröpfchen innerhalb der Texturschicht von gegenseitiger Beeinflussung bei der Expansion befreit sein. In einem solchen Fall entspricht die Höhe der Texturschicht nach Aktivierung der Tintentröpfchen dem Durchmesser der in etwa kugelförmigen, aktivierten Tintentröpfchen.

Eine bevorzugte Ausführungsform der Erfindung besteht darin, dass der Abstand zwischen den einzelnen aufgetragenen nicht aktivierten Tintentröpfchen für die Texturschicht größer ist als ein Durchmesser der nicht aktivierten Tintentröpfchen. Insbesondere ein Überlappen der einzelnen aufgetragenen, nicht aktivierten Tintentröpfchen kann zu einem nachteiligen Vermischen der einzelnen Tintentröpfchen vor einer Aktivierung beitragen. Durch das getrennte, diskrete Auftragen der einzelnen Tintentröpfchen können diese besonders ortsfest auf der Auftragungsoberfläche, insbesondere dem Textil vorgesehen werden. Weiterhin kann so besonders genau eine Höhe der Texturschicht eingestellt werden.

Besonders zweckmäßig ist es nach einer Weiterbildung der Erfindung, dass der Abstand zwischen den einzelnen aufgetragenen Tintentröpfchen für die Texturschicht variabel eingestellt wird, wodurch die Höhe innerhalb der Texturschicht variiert wird. Der Abstand zwischen einzelnen Tintentröpfchen innerhalb einer zu bildenden Texturschicht kann individuell eingestellt werden. Hierdurch kann die Expansionshöhe eines Tintentröpfchen bei der Aktivierung, also bei der vordefinierten Volumenzunahme, individuell innerhalb einer Texturschicht eingestellt werden, wodurch die Texturschicht mit einem Höhenprofil ausgebildet werden kann.

Insbesondere für das ortsgenaue Vorsehen der Tintentröpfchen ist es nach einer bevorzugten Weiterbildung der Erfindung vorgesehen, dass in einer programmierbaren Steuereinheit ein Druckmuster für die Textur digital hinterlegt wird und zum Auftragen der Tintentröpfchen mindestens ein digitaler Druckkopf verwendet wird, der mit der programmierbaren Steuereinheit in Verbindung steht. Mittels der programmierbaren Steuereinheit kann die zu bildende dreidimensionale Textur, also das Druckmuster nach Aktivierung der Tintentröpfchen, in einzelne zu druckende Texturschichten digital zerlegt werden. Für eine Berechnung der Druckpunktverteilung in den einzelnen Texturschichten kann insbesondere eine Information hinsichtlich der definierten Volumenzunahme der verwendeten mindestens einen volumenveränderlichen Tinte in der programmierbaren Steuereinheit hinterlegt sein. Die Volumenzunahme kann insbesondere ein finales Volumen eines Tintentröpfchens nach Aktivierung und Expandierung abzüglich des Volumens der aufgetragenen Tinte sein. Näherungsweise kann die Volumenzunahme quasi von einem Volumen Null des nicht aktivierten Tintentröpfchens zu dem aktivierten finalen Volumen beschrieben werden. Dies kann insbesondere für stark expandierende Tinten ausgenommen werden. Mittels eines digitalen Druckkopfs kann in besonders präziser Weise wiederholt eine genau definierte Menge an volumenveränderlicher Tinte beim Drucken der Tintentröpfchen vorgesehen werden. Somit kann insbesondere für eine Texturschicht ein reproduzierbares Druckmuster durch die programmierbare Steuereinheit definiert werden, wobei der mindestens eine digitale Druckkopf den einzelnen Punkten des Musters für ein Bedrucken zustellbar ist.

Vorzugsweise kann auch eine Menge an volumenveränderlicher Druckerfarbe für die jeweiligen Tintentröpfchen individuell eingestellt werden. Für mindestens ein erstes Tintentröpfchen kann demnach eine erhöhte Druckertintenmenge vorgesehen sein, wobei in einem anderen Bereich der Texturschicht wiederum Tintentröpfchen mit einer verringerten Tintenmenge vorgesehen werden können. Das Tintentröpfchenvolumen kann innerhalb einer Texturschicht auch beliebig alternieren.

Für den sukzessiven Aufbau einer definierten dreidimensionalen Textur kann es zweckmäßig sein, dass zum Bilden von mindestens einer zweiten Texturschicht die volumenveränderlichen Tintentröpfchen jeweils auf einer darunterliegenden Texturschicht aufgetragen und aktiviert werden. Grundsätzlich kann die definierte dreidimensionale Textur nach der vorliegenden Erfindung durch eine einzelne Texturschicht gebildet sein. Ist für die Höhe der Gesamttextur das Vorsehen einer mindestens zweiten Texturschicht erforderlich, kann die zweite Texturschicht auf einer bereits vorgesehenen ersten Texturschicht, also eine erste Lage beziehungsweise tieferliegende Ebene von aktivierten Tintentröpfchen aufgebracht werden. Die Gesamthöhe der Textur kann der Summe der Höhe der einzelnen Texturschichten entsprechen. Die Tintentröpfchen einer mindestens zweiten Texturschicht werden vorzugsweise also nicht direkt auf dem Textil sondern zumindest teilweise auf einer darunterliegenden Texturschicht aufgebracht.

Besonders zweckmäßig ist es nach einer Weiterbildung der vorliegenden Erfindung, dass der Abstand von Tintentröpfchen innerhalb einer Texturschicht zwischen übereinanderliegenden Bereichen unterschiedlicher Texturschichten variiert wird. Insbesondere durch das Variieren einer Position von Tintentröpfchen innerhalb einer Texturschicht gegenüber der Position der Tintentröpfchen in einer darunterliegenden Texturschicht kann eine besondere Elastizität der dreidimensionalen Textur erreicht werden. Die Position der einzelnen Tintentröpfchen kann beispielsweise dadurch beeinflusst werden, dass zumindest in einem Bereich einer Texturschicht der Abstand der Tintentröpfchen verringert wird. Diese Verringerung des Abstands von Tintentröpfchen kann eine Zunahme der Höhe der Texturschicht zur Folge haben. Um diese lokale Erhöhung in einer tieferliegenden Texturschicht auszugleichen, kann in einer darüberliegenden Texturschicht der Abstand von Tintentröpfchen in dem entsprechenden Bereich vergrößert werden, wodurch die zusätzliche Höhe der ersten Texturschicht ausgeglichen wird. Somit kann eine insgesamt ebene Textur mit einer vorzugsweise glatten Oberfläche gebildet werden.

Besonders bevorzugt ist es nach einer Weiterbildung des erfindungsgemäßen Verfahrens, dass zum Einstellen einer Vertiefung in einer Texturschicht im Bereich der Vertiefung Tintentröpfchen der Texturschicht mit einem Abstand zueinander angeordnet werden, welcher größer ist als der Abstand zwischen Tintentröpfchen der Texturschicht außerhalb der Vertiefung. Grundsätzlich kann innerhalb einer Texturschicht durch Variierung des Abstands von Tintentröpfchen die Texturschicht bereichsweise mit unterschiedlichen Höhen nach Aktivierung gebildet werden. Hierdurch kann auf der definierten dreidimensionalen Textur eine sekundäre Textur, insbesondere mit einer Haptik, gebildet werden. Insbesondere durch alternierendes Verringern und Vergrößern des Abstands entlang der Oberfläche einer Texturschicht kann die Texturschicht mit einer Rauigkeit gebildet werden. Dies kann auch beispielsweise die Haptik und/oder Rauigkeit der dreidimensionalen Textur insgesamt beeinflussen.

Nach einer Weiterbildung der vorliegenden Erfindung ist es bevorzugt, dass mindestens eine zweite volumenveränderliche Tinte für die Textur vorgesehen wird, welche bei Aktivierung eine vordefinierte Volumenzunahme aufweist, die sich von der ersten volumenveränderlichen Tinte unterscheidet. Zusätzlich oder alternativ zu einer Variierung eines Abstandes zwischen einzelnen Tintentröpfchen einer Texturschicht und/oder einer Variierung einer Tintenmenge für die einzelnen Tintentröpfchen kann eine variierende Höhe innerhalb einer Texturschicht auch dadurch erreicht werden, dass zumindest einzelne der Tintentröpfchen der Texturschicht mit einer zweiten volumenveränderlichen Tinte gebildet werden. Hierdurch kann erreicht werden, dass auch bei einem äquidistanten Vorsehen von Tintentröpfchen die nach Aktivierung gebildete Texturschicht mit einer Rauigkeit, Unebenheit, beziehungsweise variierenden Höhe vorgesehen wird.

Besonders bevorzugt ist es nach einer Weiterbildung der Erfindung, dass die mindestens zwei volumenveränderlichen Tinten zum Bereitstellen von Tintentröpfchen für dieselbe und/oder für unterschiedliche Texturschichten der Textur vorgesehen werden. Durch das Vorsehen der mindestens zwei volumenveränderlichen Tinten innerhalb derselben Texturschicht kann insbesondere eine Oberflächenbeschaffenheit der Texturschicht eingestellt werden. Hierbei können die mindestens zwei volumenveränderlichen Tinten für Tintentröpfchen mit gleichen oder variierenden Abstand/Volumen vorgesehen sein. Insbesondere beim Vorsehen der volumenveränderlichen Tinten in unterschiedlichen Texturschichten können Texturschichten ausgebildet werden, welche unterschiedliche Eigenschaften, insbesondere eine besondere Flexibilität beziehungsweise Steifigkeit aufweisen. Hierdurch kann beispielsweise eine Elastizität der definierten dreidimensionalen Textur, welche aus den einzelnen Texturschichten gebildet ist, eingestellt werden. So kann beispielsweise eine volumenveränderliche Tinte, welche eine besonders große Volumenzunahme bei Aktivierung aufweist, eine besondere Duktilität der gebildeten Texturschicht bewirken. Eine volumenveränderliche Tinte, welche nur eine geringe Volumenzunahme bei Aktivierung aufweist, kann insbesondere zu einer Festigkeit der dreidimensionalen Textur, insbesondere der Texturschicht beitragen.

Besonders bevorzugt werden die Tintentröpfchen einer Texturschicht mit einem Abstand A zueinander vorgesehen, welcher $A < D * \sqrt{2}$ (D = Durchmesser) der expandierten Tintenköpfchen entspricht.

Die erfindungsgemäße dreidimensionale Textur für ein Textil ist dadurch gekennzeichnet, dass die Tintentröpfchen für die mindestens einen Texturschicht mit mindestens einem Abstand zueinander vorgesehen sind, der kleiner oder gleich dem Durchmesser von aktivierten Tröpfchen ist.

Ein weiterer Grundgedanke der vorliegenden Erfindung besteht darin, eine dreidimensionale Textur mit mindestens einer Texturschicht vorzusehen. Die mindestens eine Texturschicht kann aus aktivierten Tintentröpfchen gebildet sein, welche einen Abstand zueinander aufweisen. Dieser kann insbesondere so ausgebildet sein, dass die einzelnen Tintentröpfchen sich vor einer Aktivierung nicht überlappen, besonders bevorzugt nicht berühren. Die Tintentröpfchen einer Texturschicht können sich aufgrund der Wahl des Abstands zueinander gegenseitig bei der Volumenzunahme, also dem Ausdehnen, behindern beziehungsweise beeinflussen. Durch den erfindungsgemäß gewählten Abstand zwischen den Tintentröpfchen liegen diese nach Aktivierung nicht zwingend in Form von idealen Kugeln sondern vielmehr in Form von deformierten, insbesondere lateral durch weitere aktivierte Tintentröpfchen der Texturschicht gequetschten und/oder eierförmigen Tintentröpfchen vor, welches mit einer Höhe gebildet sind, welche die Höhe einer idealen Kugel übersteigen kann. Durch den definierten Abstand der einzelnen Tintentröpfchen zueinander kann so durch die individuell einstellbare Begrenzung des in der Ebene zur Expansion zur Verfügung stehenden Bereichs eine resultierende Höhe der Texturschicht eingestellt sein. Hierbei kann die Höhe der Texturschicht mit einem abnehmenden Abstand zwischen den einzelnen Tintentröpfchen größer sein als bei einer Texturschicht, in welcher die Tintentröpfchen mit einem größeren Abstand zueinander vorgesehen sind.

Nach einer Weiterbildung der vorliegenden Erfindung ist es vorgesehen, dass der Abstand zwischen den Tintentröpfchen für die mindestens eine Texturschicht größer ist als ein Durchmesser von nicht aktivierten Tintentröpfchen.

Besonders bevorzugt ist es nach einer Weiterbildung der Erfindung, dass die Textur mindestens eine zweite volumenveränderliche Tinte aufweist, die bei Aktivierung eine vordefinierte Volumenzunahme aufweist, die sich von der ersten volumenveränderlichen Tinte unterscheidet. Die einzelnen Tintentröpfchen der mindestens einen texturbildenden Texturschicht können also aus unterschiedlichen Tinten gebildet sein. Diese Tinten können insbesondere unterschiedliche jedoch jeweils definierte Volumenzunahmen bei Aktivierung aufweisen. Durch das punktuell oder bereichsweise Vorsehen unterschiedlicher Tinten innerhalb einer Texturschicht kann die nach Aktivierung gebildete Texturschicht mit einer Oberflächenbeschaffenheit, insbesondere einer Rauheit, oder Unebenheit und/oder Haptik vorgesehen sein.

Besonders zweckmäßig ist es nach einer Weiterbildung der Erfindung, dass die mindestens zwei volumenveränderlichen Tinten in derselben und/oder in unterschiedlichen Texturschichten der Textur vorgesehen sind. Durch das Vorsehen der mindestens zwei volumenveränderlichen Tinten innerhalb derselben Texturschicht kann diese beispielsweise mit einer Unebenheit, wie bereits vorangehend beschrieben, gebildet sein. Insbesondere durch das Vorsehen unterschiedlicher Tinten in verschiedenen Texturschichten der zu bildenden dreidimensionalen Textur kann diese mit unterschiedlichen Eigenschaften gebildet sein. So kann beispielsweise mittels einer ersten volumenveränderlichen Tinte mindestens eine Texturschicht mit einer besonderen Elastizität für die dreidimensionale Textur bereitgestellt sein, wohingegen mittels einer zweiten volumenveränderlichen Tinte mindestens eine Texturschicht gebildet ist, welche für die dreidimensionale Textur eine besonders hohe Steifigkeit bereitstellt. Die Tinten können auch mit unterschiedlichen Pigmenten oder transparent ausgebildet sein. Innerhalb einer erfindungsgemäßen Textur, insbesondere innerhalb einer Texturschicht kann jede vorgesehene volumenveränderliche Tinte mit einer Vielzahl von Farben, insbesondere Pigmenten, vorgesehen sein.

Die Eigenschaften der einzelnen volumenveränderlichen Tinten können insbesondere von der Volumenzunahme der jeweiligen Tinte abhängen. So kann beispielsweise eine Tinte mit besonders großer Volumenzunahme eine besonders duktile oder weiche Haptik begünstigen, wohingegen eine Tinte mit einer geringeren Volumenzunahme nach Aktivierung eine Texturschicht mit einer besonders hohen Festigkeit und/oder Rauigkeit bereitstellt.

Tintentröpfchen für eine Texturschicht können nicht aktivierte Tröpfchen sein, wohingegen Tintentröpfchen einer Texturschicht aktivierte, also schichtbildende Tröpfchen sein können.

In einem Randbereich der Textur, in welchem Tintentröpfchen nicht zwingend von allen Seiten von Tintentröpfchen umgeben sind, kann bei Aktivierung eine abweichende Höhe der Tintentröpfchen auftreten. Diesem Umstand kann durch Anpassung des Abstands der Tintentröpfchen innerhalb des Randbereichs begegnet werden.

In der Zeichnung wird nachfolgend die Erfindung weiter erläutert. In den Figuren zeigen:

Fig. 1:     eine Seitenansicht eines aufgetragenen Tintentröpfchens sowie eines expandierten Tintentröpfchens,

Fig. 2:     eine Seitenansicht einer Anordnung von Tintentröpfchen und aktivierten Tintentröpfchen, welche eine Texturschicht mit einer Höhe $H_1$ bilden,

Fig. 3:     eine Seitenansicht einer Anordnung von Tintentröpfchen und eine Anordnung von aktivierten Tintentröpfchen, welche eine Texturschicht mit einer Höhe $H_2$ bilden, und

Fig. 4:     eine Anordnung von Tintentröpfchen auf einer darunterliegenden Texturschicht, welche aus aktivierten Tintentröpfchen gebildet ist.

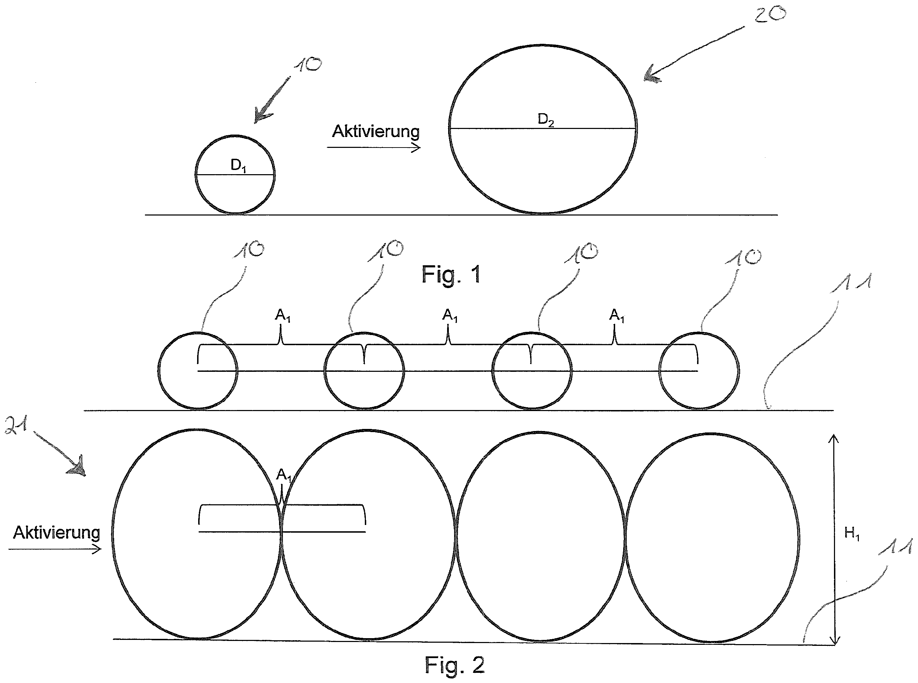

Fig. 1 zeigt ein Tintentröpfchen 10 mit einem Durchmesser $D_1$. Solche Tintentröpfchen können auf einem Textil vorgesehen werden, um nach Aktivierung gemeinsam mindestens eine Texturschicht einer dreidimensionalen Textur zu bilden. Die Texturschicht ist hierbei aus einer Vielzahl von aktivierten Tintentröpfchen 20 mit einem Durchmesser $D_2$ gebildet, wobei $D_2 > D_1$ ist. Vorzugsweise kann die erfindungsgemäße dreidimensionale Textur aus einer Schicht gebildet sein. Besonders bevorzugt sind mehrere der Texturschichten übereinander angeordnet und bilden gemeinsam die erfindungsgemäße dreidimensionale Textur. Durch Aktivierung nimmt das Volumen des Tintentröpfchens 10 zu. Durch die Volumenzunahme ändert sich der Durchmesser $D_1$ des Tintentröpfchens zu dem Durchmesser $D_2$, wobei $D_2$ größer oder gleich $D_1$ sein kann.

Fig. 2 zeigt eine Anordnung von nebeneinander angeordneten Tintentröpfchen 10. Die unterhalb der Tintentröpfchen 10 angedeutete Ebene 11 kann beispielsweise ein Textil oder eine tieferliegende Texturschicht sein, auf welcher die Tintentröpfchen 10 vorgesehen werden. Die Tintentröpfchen 10 können auf der Oberfläche 11 mit einem Abstand A1 vorgesehen werden. Dieser Abstand kann größer und/oder gleich dem Durchmesser des nicht aktivierten Tintentröpfchens, also größer oder gleich $D_1$ aber auch $\geq D_2$, sein. Bei der Darstellung gemäß Fig. 2 handelt es sich um eine schematische Seitenansicht. Sowohl hinter der Bildebene als auch vor der Bildebene können weitere Tintentröpfchen 10 für die Texturschicht angeordnet sein, wodurch jedes Tintentröpfchen innerhalb der Auftragungsebene von einer Mehrzahl von Tintentröpfchen, vorzugsweise mindestens vier, besonders bevorzugt acht Tintentröpfchen, umgeben ist. Nach dem Auftragen der Tintentröpfchen 10 können diese zu der Texturschicht 21 aktiviert werden. Die Aktivierung kann beispielsweise chemisch oder thermisch erfolgen. Da der Abstand zwischen den aktivierten Tintentröpfchen der Texturebene 21 gemäß Fig. 2 kleiner als der Durchmesser $D_2$ eines expandierten aktivierten Tintentröpfchens sein kann, wodurch der innerhalb der Ebene zur Verfügung stehende Raum kleiner ist als für eine ideale kugelförmige Ausdehnung des Tintentröpfchens notwendig wäre, kann die Texturebene 21 mit einer Höhe gebildet sein, welche größer ist als der Durchmesser $D_2$ des expandierten Tintentröpfchens 20 gemäß Fig. 1. Durch Aktivierung und Expansion der Tintentröpfchen 10 kann die Texturschicht 21 gebildet sein.

Vorzugsweise kann die Volumenzunahme des Tintentröpfchens in Form einer vordefinierten Volumenzunahme bereitgestellt sein. Dies kann zur Folge haben, dass das Tintentröpfchen, welches vorzugsweise mit gleichem Volumen vorgesehen wird, grundsätzlich die gleiche Volumenzunahme erfährt.

Besonders bevorzugt kann die Volumenzunahme zusätzlich durch die Dauer der Aktivierung, insbesondere die Dauer einer chemischen oder thermischen Behandlung, beeinflusst werden.

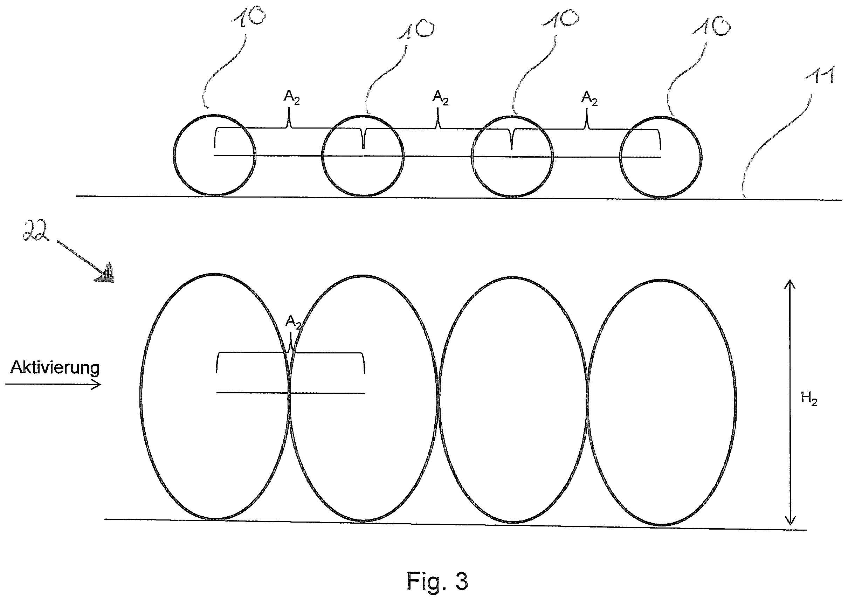

Aus Fig. 3 geht eine Anordnung von Tintentröpfchen 10 auf einer Ebene 11 hervor, wobei die Tintentröpfchen mit einem Abstand $A_2$ zueinander angeordnet sind. Wie auch mit Bezug auf Fig. 2 ausgeführt, handelt es sich bei der Darstellung gemäß Fig. 3 um eine Seitenansicht, bei welcher ein Schnitt durch die Auftragungsebene 11, insbesondere durch ein Textil, mit den aufgetragenen Tröpfchen 10 vorliegt. Bei der erfindungsgemäßen Anordnung gemäß Fig. 3 sind grundsätzlich die einzelnen Tintentröpfchen von einer Mehrzahl von Tintentröpfchen 10 innerhalb der Ebene 11 umgeben. Vorzugsweise sind die einzelnen Tintentröpfchen von mindestens vier, besonders bevorzugt acht weiteren Tintentröpfchen innerhalb der Ebene umgeben. Die einzelnen Tintentröpfchen innerhalb der zu bildenden Texturschicht 22 sind mit einem Abstand $A_2$ zueinander vorgesehen, wobei der Abstand $A_2$ kleiner als der Abstand $A_1$ nach Fig. 2 ist.

Nach Aktivierung ist eine Texturschicht 22 aus den Tröpfchen 10, welche eine Höhe $H_2$ aufweisen, gebildet. Aufgrund des verminderten Abstands $A_2$ im Vergleich zu $A_1$ ist die Höhe der Texturschicht $H_2$ größer als $H_1$. Folglich kann die Höhe der zu bildenden Texturschicht durch das Einstellen einer Beabstandung zwischen den einzelnen aufgetragenen Tintentröpfchen beeinflusst werden. Je geringer der Abstand zwischen den Tintentröpfchen, desto höher wird die gebildete Texturschicht nach Aktivierung der einzelnen aufgetragenen Tintentröpfchen.

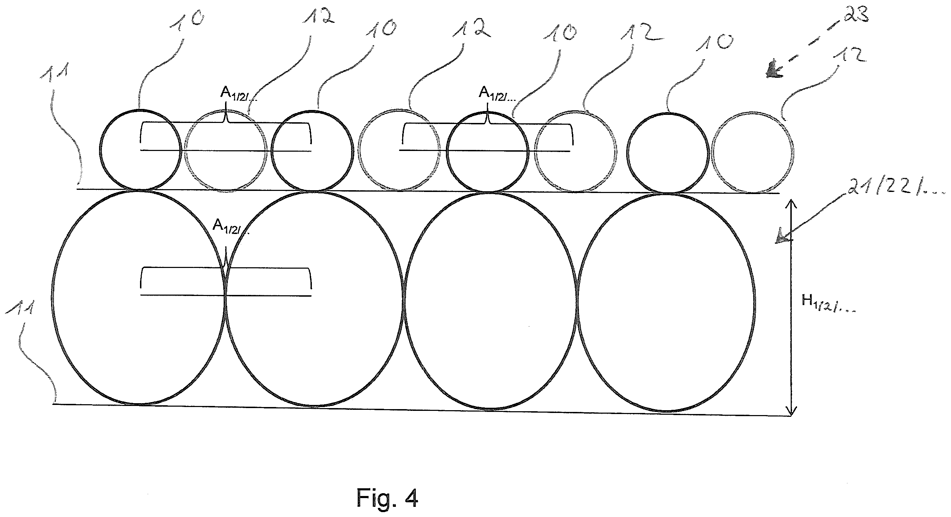

Aus Fig. 4 geht eine erste Texturschicht 21 hervor, welche aus den Tintentröpfchen 10 gemäß Fig. 2 mit dem Abstand $A_1$ gebildet sein kann. Diese weist entsprechend die Höhe $H_1$ auf. Die gebildete Texturschicht 21 bildet die Ebene 11 gemäß Figuren 2 und 3, auf welcher eine zweite Texturschicht vorgesehen werden kann. Hierfür können Tintentröpfchen 10 auf einer Oberfläche/Ebene der Texturschicht 21 beispielsweise mit einem Abstand $A_2$ zueinander vorgesehen werden. Die Tintentröpfchen 10 auf der ersten Texturschicht 21 können mit einem beliebigen Abstand zueinander vorgesehen werden. Auch kann die erste Texturschicht 21 aus Tintentröpfchen ausgebildet sein, welche einen beliebigen und/oder variierenden Abstand zueinander aufweisen. Wie aus Fig. 4 hervorgeht, kann der Abstand der Tintentröpfchen der ersten Texturschicht 21 von den auf der Texturschicht 21 aufgetragenen Tintentröpfchen 10 für eine zweite Texturschicht 23 unterschiedlich sein. Die Tintentröpfchen für die zweite Texturschicht 23 können oberhalb der Position der Tintentröpfchen für die Texturschicht 21 vorgesehen sein. Hierdurch sind die Tintentröpfchen der einzelnen Ebenen in etwa koaxial zueinander angeordnet. Alternativ können die Tintentröpfchen 10 für eine zweite Texturebene 23 auch versetzt zu der Position der Tintentröpfchen 10 für eine erste Texturebene 21 vorgesehen sein. Diese sind in Form von grauen Kreisen 12 in Fig. 4 dargestellt. Nach Aktivierung der Tintentröpfchen 10 und/oder 12 auf der ersten Texturschicht 21 ist auf der Texturschicht 21 eine zweite Texturschicht 23 gebildet.

Sind alle vorgesehenen Schichten aktiviert, kann die Textur gebildet sein.

Der Abstand von Tintentröpfchen kann auch innerhalb der einzelnen Texturschichten variieren. Hierdurch können Texturschichten unterschiedlicher Höhe oder einzelne Texturschichten mit einem Höhenprofil gebildet sein. Durch entsprechende, beispielsweise alternierende Anordnung von Tintentröpfchen mit erhöhtem und verringerten Abstand zueinander kann eine Unebenheit oder Rauheit der jeweiligen Texturschicht ausgebildet werden.

## Patentansprüche

1. Verfahren zum Erzeugen einer definierten dreidimensionalen Textur auf einem Textil, bei welchem

   - die Textur auf dem Textil mit einer definierten Grundfläche und einer definierten Höhe vorgesehen wird,
   - die Textur mit mindestens einer Texturschicht (21) gebildet wird, wobei die Höhe und die Grundfläche der Textur durch mindestens eine definierte Höhe und mindestens eine definierte Grundfläche der mindestens einen Texturschicht (21) eingestellt werden,
   - mindestens eine volumenveränderliche Tinte in Form von einzelnen Tintentröpfchen (10) auf dem Textil aufgetragen wird, wobei entsprechend der Grundfläche der Textur eine Vielzahl von Tintentröpfchen (10) auf dem Textil vorgesehen werden, und

- die aufgetragenen Tintentröpfchen (10) aktiviert werden, wodurch eine vordefinierte Volumenzunahme der Tintentröpfchen (10) erzeugt und die mindestens eine Texturschicht (21) auf dem Textil gebildet wird,

**dadurch gekennzeichnet,**

**dass** zum Bereitstellen der definierten Höhe der mindestens einen Texturschicht (21) zwischen den aufgetragenen Tintentröpfchen (10) für die Texturschicht (21) mindestens ein definierter Abstand eingestellt wird, welcher kleiner oder gleich einem Durchmesser von aktivierten Tintentröpfchen (10) der Texturschicht (21) ist.

2. Verfahren nach Anspruch 1,
**dadurch gekennzeichnet,**
**dass** der Abstand zwischen den einzelnen aufgetragenen nicht aktivierten Tintentröpfchen (10) für die Texturschicht (21) größer ist als ein Durchmesser der nicht aktivierten Tintentröpfchen (10).

3. Verfahren nach einem der Ansprüche 1 oder 2,
**dadurch gekennzeichnet,**
**dass** der Abstand zwischen den einzelnen aufgetragenen Tintentröpfchen (10) für die Texturschicht variabel eingestellt wird, wodurch die Höhe innerhalb der Texturschicht (21) variiert wird.

4. Verfahren nach einem der Ansprüche 1 bis 3,
**dadurch gekennzeichnet,**
**dass** in einer programmierbaren Steuereinheit ein Druckmuster für die Textur digital hinterlegt wird und zum Auftragen der Tintentröpfchen mindestens ein digitaler Druckkopf verwendet wird, der mit der programmierbaren Steuereinheit in Verbindung steht.

5. Verfahren nach einem der Ansprüche 1 bis 4,
**dadurch gekennzeichnet,**
**dass** zum Bilden von mindestens einer zweiten Texturschicht (23) die volumenveränderlichen Tintentröpfchen (10) jeweils auf einer darunterliegenden Texturschicht (21) aufgetragen und aktiviert werden.

6. Verfahren nach einem der Ansprüche 1 bis 5,
**dadurch gekennzeichnet,**
**dass** der Abstand von Tintentröpfchen (10) innerhalb einer Texturschicht (21) zwischen übereinanderliegenden Bereichen unterschiedlicher Texturschichten (21) variiert wird.

7. Verfahren nach einem der Ansprüche 1 bis 6,
**dadurch gekennzeichnet,**

**dass** zum Einstellen einer Vertiefung in einer Texturschicht (21) im Bereich der Vertiefung Tintentröpfchen der Texturschicht (21) mit einem Abstand zueinander angeordnet werden, welcher größer ist als der Abstand zwischen Tintentröpfchen der Texturschicht außerhalb der Vertiefung.

8. Verfahren nach einem der Ansprüche 1 bis 7,
**dadurch gekennzeichnet,**
**dass** mindestens eine zweite volumenveränderliche Tinte für die Textur vorgesehen wird, welche bei Aktivierung eine vordefinierte Volumenzunahme aufweist, die sich von der ersten volumenveränderlichen Tinte unterscheidet.

9. Verfahren nach einem der Ansprüche 1 bis 8,
**dadurch gekennzeichnet,**
**dass** die mindestens zwei volumenveränderlichen Tinten zum Bereitstellen von Tintentröpfchen (10) in derselben und/oder in unterschiedlichen Texturschichten (21, 22, 23) der Textur vorgesehen werden.

10. Dreidimensionale Textur für ein Textil mit

   - einer Grundfläche und einer Höhe,
   - mindestens einer Texturschicht (21), die aus mindestens einer volumenveränderlichen Tinte in Form einzelner Tintentröpfchen (10) gebildet ist, welche auf das Textil auftragbar und für eine definierte Volumenzunahme aktivierbar sind,

**dadurch gekennzeichnet,**

**dass** die Tintentröpfchen (10) für die mindestens eine Texturschicht mit mindestens einem Abstand zueinander vorgesehen sind, der kleiner oder gleich dem Durchmesser von aktivierten Tintentröpfchen ist.

11. Dreidimensionale Textur nach Anspruch 10,
**dadurch gekennzeichnet,**
**dass** der Abstand zwischen den Tintentröpfchen für die mindestens eine Texturschicht größer ist als ein Durchmesser von nicht aktivierten Tintentröpfchen (10).

12. Dreidimensionale Textur nach einem der Ansprüchen 10 oder 11,
**dadurch gekennzeichnet,**
**dass** die Textur mindestens eine zweite volumenveränderliche Tinte aufweist, die bei Aktivierung eine vordefinierte Volumenzunahme aufweist, die sich von der ersten volumenveränderlichen Tinte unterscheidet.

13. Dreidimensionale Textur nach einem der Ansprüche 10 bis 12,
**dadurch gekennzeichnet,**

**dass** die mindestens zwei volumenveränderlichen Tinten in derselben und/oder in unterschiedlichen Texturschichten (21, 22, 23) der Textur vorgesehen sind.

## Claims

1. Method for producing a defined three-dimensional texture on a textile, in which

    - the texture is provided on the textile with a defined basic area and a defined height,
    - the texture is formed with at least one texture layer (21), wherein the height and the basic area of the texture are set by at least one defined height and at least one defined basic area of the at least one texture layer (21),
    - at least one variable-volume ink is applied in the form of individual ink droplets (10) onto the textile, wherein a plurality of ink droplets (10) are provided on the textile according to the basic area of the texture, and
    - the applied ink droplets (10) are activated, whereby a predefined volume increase of the ink droplets (10) is produced and the at least one texture layer (21) is formed on the textile,

    **characterized in that**
    to make available the defined height of the at least one texture layer (21) at least one defined distance is set between the applied ink droplets (10) for the texture layer (21), the said distance being smaller or equal to a diameter of activated ink droplets (10) of the texture layer (21).

2. Method according to claim 1,
   **characterized in that**
   the distance between the individual applied non-activated ink droplets (10) for the texture layer (21) is larger than a diameter of the non-activated ink droplets (10).

3. Method according to any one of claims 1 or 2,
   **characterized in that**
   the distance between the individual applied ink droplets (10) for the texture layer is set in a variable manner, whereby the height is varied within the texture layer (21).

4. Method according to any one of claims 1 to 3,
   **characterized in that**
   in a programmable control unit a printing pattern for the texture is stored digitally and for the application of the ink droplets at least one digital print head is used which is connected to the programmable control unit.

5. Method according to any one of claims 1 to 4,
   **characterized in that**
   to form at least one second texture layer (23) the variable-volume ink droplets (10) are each applied and activated on an underlying texture layer (21).

6. Method according to any one of claims 1 to 5,
   **characterized in that**
   the distance of ink droplets (10) within a texture layer (21) is varied between superimposed regions of different texture layers (21).

7. Method according to any one of claims 1 to 6,
   **characterized in that**
   to set a depression in a texture layer (21), in the region of the depression ink droplets of the texture layer (21) are arranged with a distance to each other that is larger than the distance between ink droplets of the texture layer outside the depression.

8. Method according to any one of claims 1 to 7,
   **characterized in that**
   at least one second variable-volume ink is provided for the texture, which, on activation, has a predefined volume increase that differs from the first variable-volume ink.

9. Method according to any one of claims 1 to 8,
   **characterized in that**
   the at least two variable-volume inks are provided for making available ink droplets (10) in the same and/or in different texture layers (21, 22, 23) of the texture.

10. Three-dimensional texture for a textile having

    - a basic area and a height,
    - at least one texture layer (21), which is formed of at least one variable-volume ink in the form of individual ink droplets (10) that can be applied onto the textile and can be activated for a defined volume increase,

    **characterized in that**
    the ink droplets (10) for the at least one texture layer are provided at least with a distance to each other that is smaller than or equal to the diameter of activated ink droplets.

11. Three-dimensional texture according to claim 10,
    **characterized in that**
    the distance between the ink droplets for the at least one texture layer is larger than a diameter of non-activated ink droplets (10).

12. Three-dimensional texture according to any one of claims 10 or 11,
    **characterized in that**

the texture has at least one second variable-volume ink which, on activation, has a predefined volume increase that differs from the first variable-volume ink.

13. Three-dimensional texture according to any one of claims 10 to 12,
**characterized in that**
the at least two variable-volume inks are provided in the same and/or in different texture layers (21, 22, 23) of the texture.

**Revendications**

1. Procédé destiné à produire une texture tridimensionnelle définie sur un textile, dans lequel

- la texture sur le textile est prévue avec une surface de base définie et une hauteur définie,
- la texture est formée avec au moins une couche de texture (21), dans lequel la hauteur et la surface de base de la texture sont réglées par au moins une hauteur définie et au moins une surface de base définie de l'au moins une couche de texture (21),
- au moins une encre à volume variable est appliquée sur le textile sous la forme de gouttelettes d'encre (10) individuelles, dans lequel une pluralité de gouttelettes d'encre (10) sont prévues sur le textile en fonction de la surface de base de la texture, et
- les gouttelettes d'encre (10) appliquées sont activées, moyennant quoi une augmentation de volume prédéfinie des gouttelettes d'encre (10) est produite et l'au moins une couche de texture (21) est formée sur le textile,

**caractérisé en ce**
**que**, pour la fourniture de la hauteur définie de l'au moins une couche de texture (21), au moins une distance définie entre les gouttelettes d'encre (10) appliquées pour la couche de texture (21) est réglée, laquelle est inférieure ou égale à un diamètre de gouttelettes d'encre (10) activées de la couche de texture (21).

2. Procédé selon la revendication 1,
**caractérisé en ce**
**que** la distance entre les gouttelettes d'encre (10) individuelles non activées appliquées pour la couche de texture (21) est supérieure à un diamètre des gouttelettes d'encre (10) non activées.

3. Procédé selon l'une quelconque des revendications 1 ou 2,
**caractérisé en ce**
**que** la distance entre les gouttelettes d'encre (10) individuelles appliquées pour la couche de texture est réglée de façon variable, moyennant quoi la hauteur à l'intérieur de la couche de texture (21) est modifiée .

4. Procédé selon l'une quelconque des revendications 1 à 3,
**caractérisé en ce**
**qu'**un modèle d'impression pour la texture est enregistré numériquement dans une unité de commande programmable et au moins une tête d'impression numérique, qui communique avec l'unité de commande programmable, est utilisée pour l'application des gouttelettes d'encre.

5. Procédé selon l'une quelconque des revendications 1 à 4,
**caractérisé en ce**
**que**, pour la formation d'au moins une deuxième couche de texture (23), les gouttelettes d'encre (10) à volume variable sont appliquées respectivement sur une couche de texture (21) sous-jacente et activées.

6. Procédé selon l'une quelconque des revendications 1 à 5,
**caractérisé en ce**
**que** la distance de gouttelettes d'encre (10) à l'intérieur d'une couche de texture (21) entre des zones superposées de différentes couches de texture (21) est modifiée.

7. Procédé selon l'une quelconque des revendications 1 à 6,
**caractérisé en ce**
**que**, pour le réglage d'un évidement dans une couche de texture (21) dans la zone de l'évidement, des gouttelettes d'encre de la couche de texture (21) sont agencées à une distance l'une par rapport à l'autre, laquelle est supérieure à la distance entre des gouttelettes d'encre de la couche de texture à l'extérieur de l'évidement.

8. Procédé selon l'une quelconque des revendications 1 à 7,
**caractérisé en ce**
**qu'**au moins une deuxième encre à volume variable est prévue pour la texture, laquelle présente une augmentation de volume prédéfinie lors de l'activation, qui se distingue de la première encre à volume variable.

9. Procédé selon l'une quelconque des revendications 1 à 8,
**caractérisé en ce**
**que** les au moins deux encres à volume variable sont prévues pour la fourniture de gouttelettes d'encre (10) dans les mêmes et/ou dans des différentes couches de texture (21, 22, 23) de la texture.

10. Texture tridimensionnelle pour un textile avec

- une surface de base et une hauteur,
- au moins une couche de texture (21), qui est formée d'au moins une encre à volume variable sous la forme de gouttelettes d'encre (10) individuelles, lesquelles peuvent être appliquées sur le textile et activées pour une augmentation de volume définie,

**caractérisée en ce**
**que** les gouttelettes d'encre (10) pour l'au moins une couche de texture sont prévues avec au moins une distance l'une par rapport à l'autre, qui est inférieure ou égale au diamètre de gouttelettes d'encre activées.

11. Texture tridimensionnelle selon la revendication 10, **caractérisée en ce**
**que** la distance entre les gouttelettes d'encre pour l'au moins une couche de texture est supérieure à un diamètre de gouttelettes d'encre (10) non activées.

12. Texture tridimensionnelle selon l'une quelconque des revendications 10 ou 11, **caractérisée en ce**
**que** la texture présente au moins une deuxième encre à volume variable, qui présente une augmentation de volume prédéfinie lors de l'activation, qui se distingue de la première encre à volume variable.

13. Texture tridimensionnelle selon l'une quelconque des revendications 10 à 12, **caractérisée en ce**
**que** les au moins deux encres à volume variable sont prévues dans les mêmes et/ou dans des différentes couches de texture (21, 22, 23) de la texture.

Fig. 1

Fig. 2

EP 3 450 621 B1

Fig. 3

EP 3 450 621 B1

Fig. 4

EP 3 450 621 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2005113692 A1